# EUROPEAN PATENT APPLICATION

(11) **EP 3 372 519 A1**
(43) Date of publication of application: **12.09.2018**
(21) Application number: 18382148.7
(22) Date of filing: 08.03.2018
(51) Int. Cl.: B65D 19/44, B65D 81/05, F16B 21/08

(54) **SUPPORT ELEMENT FOR TRANSPORT PLATFORM**

(30) Priority: 09.03.2017 ES 201730248 U
(71) Applicant: Plasticos Flome, S.L., 46460 Silla (Valencia) (ES)
(72) Inventor: Flores Cerceda, Mabel, 46460 Valencia (ES)
(74) Representative: Isern-Jara, Nuria

(57) **Abstract**

The invention relates to a support element (1) for transport platforms that comprises at least one through hole (3) on a horizontal base (4), two adjacent side walls (6a, 6b) and a permanent fastening element (7) that passes through the through hole on the horizontal base, said support element firmly fastened to the transport platform (2), and as such the fastening thereof is not affected by normal oscillations that finished parts or loads that are placed on the same may experience, contributing to the safety and integrity of said finished parts or loads.

## Description

### DESCRIPTION

### Object of the invention

The present invention, in accordance with the stated title of this specification, relates to a support element for a transport platform, especially, a transport platform for transporting finished parts. Said support element is firmly fastened to the transport platform, and as such the fastening thereof is not affected by normal oscillations that finished parts or loads that are placed on the same may experience, contributing to the safety and integrity of said finished parts or loads.

### Background of the invention

It is well known that for the transport and transfer of finished parts that need to be assembled on a production line or transported from one factory to another, as well as for other logistical operations, said finished parts are positioned on tray-like platforms with a flat structure and with a series of housings or cribs to individually house and support each one of said parts in the aforementioned operations of transfer and transport.

In sectors in which precision in logistical operations and transportation of parts is essential, such as the automotive sector, the requirements of quality and protection of the pieces during said logistical operations are of the utmost importance.

Thus, in a conventional way, transport platforms made of plastic are preferably used, given that this type of material already complies with the conditions of rigidity and light weight required, as well as with moderate production costs.

The drawback of said transport platforms is that due to the type of materials used in the manufacturing thereof, mainly acrylonitrile butadiene styrene (ABS) or polypropylene, slight oscillatory movements can be produced in the same when the parts to be transported by the same are positioned on the respective transport housings or planes, which implies rubbing of the finished part, which is normally made of a metal-type material, on the surface of the transport platform, which can lead to the appearance of impurities and shavings, and which can substantially undermine the quality of the finish of said finished part, and therefore, require cleaning and adjustments prior to the assembly and use thereof.

To deal with this problem, elements made of different material have been incorporated, assembled on said transport platforms for finished parts, also manufactured with polymeric-type materials, but with other properties, which provide a new positioning plane and support for the finished part, preventing direct contact with the transport platform.

Normally, the assembly of these polymeric elements, by way of support studs, is done with conventional screw elements, although to do so, the element itself must house a metal nut injected on the inside thereof, in order for the screw to be able to thread into the same and fasten the aforementioned element to the transport platform.

However, this type of fastening leads to an additional problem, both in the total cost of the support stud and the injection of a metal part on the polymeric body of the same, and in the work of assembling the screw elements of said element on the transport platform in question.

Additionally, the screwed assembly of said elements provides a relative fastening safety, given that for logistical and transportation operations that last a long time, the oscillations of the finished parts can undermine the effectiveness of said fastening.

### Description of the invention

The aim of the present invention is to provide a support element for transport platforms, especially for transport platforms of finished parts, overcoming the previously mentioned drawbacks and providing additional advantages that will be clear from the description provided below.

It is therefore an object of the present invention to provide a support element for transport platforms for finished parts, the support element of which is characterized in that it comprises at least one through hole on the horizontal base thereof, two adjacent side walls and a permanent fastening element that passes through the through hole on the horizontal base.

Specifically, the through hole that is arranged on the horizontal base of the support element coincides with a through hole on the transport platform and is useful in that through both through holes a permanent fastening element is situated, which when placed, makes it possible for the support element to be firmly fastened in an impenetrable way to the transport platform, thereby ensuring that the fastening of the support element is not affected, specifically, not weakened, by the oscillations or slight movements that can be produced by the finished part or load during transport operations.

In one specific embodiment of the present invention, the fastening element is a rivet. Said rivet will be suitably situated and placed passing through the through hole on the horizontal base of the support element and the through hole of the transport platform, using a suitable tool for the same, for example a rivet gun.

In one particular embodiment of the present invention, the support element for transport platforms comprises two through holes on the horizontal base. Said two through holes coincide with two through holes located on the transport platform. Specifically, in the present invention the term "coincides" refers to the fact that one through hole on the transport platform corresponds to each through hole on the horizontal base of the support element. Therefore, in each pair consisting of the "through hole on the support base - through hole on the transport platform", a permanent fastening element will be inserted, for example a rivet, such that the support element remains fastened to the transport platform.

In one particular embodiment of the present invention, the support element for transport platforms is made of a polymeric material; said polymeric material being a material that is resistant to the environmental conditions of moisture and temperature, without the chemical and physical properties thereof being affected. It is likewise a material that is resistant to the effects of corrosive liquids, oils and lubricants, as well as to the friction with metal parts.

The polymeric material that makes up the support element for transport platforms of the present invention is optimal for the function of supporting the finished part, which is carried out by said support element on the transport platform to which it is mounted. In a more specific embodiment of the present invention, the polymeric material is polyurethane.

On the other hand, the transport platform to which the support element object of the present invention is mounted is manufactured with a conventional polymeric material or ABS, among others. Other characteristics and advantages of the support element object of the present invention will be evident from the description of a preferred, but not exclusive, embodiment, which is illustrated by way of non-limiting example in the accompanying drawings,

In an alternative embodiment of the invention, the permanent fastening element (7) can be a clip rivet that has a flat head, being especially suitable for support elements with greater width, as well as suitable in cases where a better fastening is required when situated at the ends of a transport platform.

### Brief description of the drawings

To complete the description provided below, and for the purpose of helping to make the characteristics of the invention more readily understandable, the present specification is accompanied by a set of figures based on which the innovations and advantages of the support element object of the present invention will be more easily understood.
Figure 1 is a perspective view of the support element object of the present invention.
Figure 2 is a perspective view of the support element object of the present invention, as well as a pair of permanent fastening elements, exemplified in this case by rivets.
Figure 3 is a schematic view of a part of a transport platform with a support element fastened to the same and another support element to be fastened.
Figure 4 is an exploded perspective view of the horizontal base with two clip rivet type permanent fastening elements.
Figure 5 is an exploded perspective view of the horizontal base with two different types of permanent fastening elements.

### Description of the preferred embodiment

In light of the aforementioned figures, the support element for transport platforms object of the present invention can be described in the following embodiment.

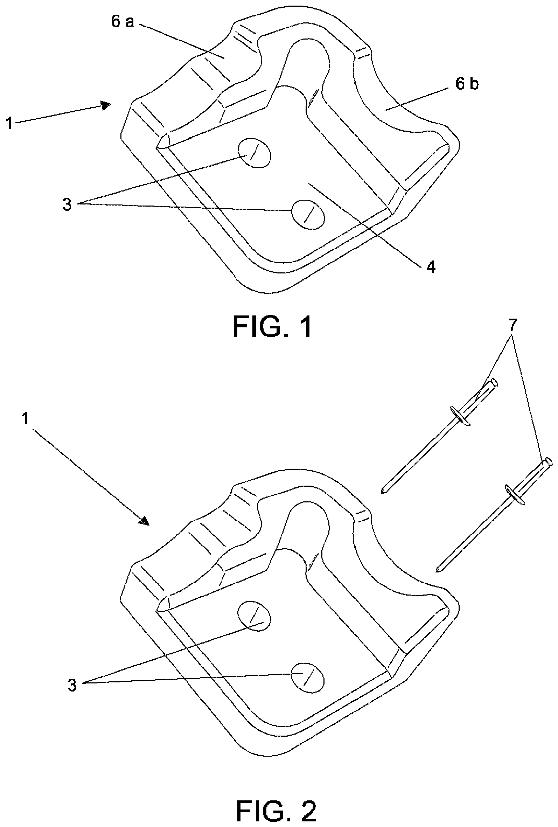

The support element (1) for transport platforms (2) is characterized in that it comprises at least one through hole (3) on the horizontal base (4) thereof, two adjacent side walls (6a) and (6b) and a permanent fastening element (7) that passes through the through hole (3) on the horizontal base (4). See figures 1 to 3.

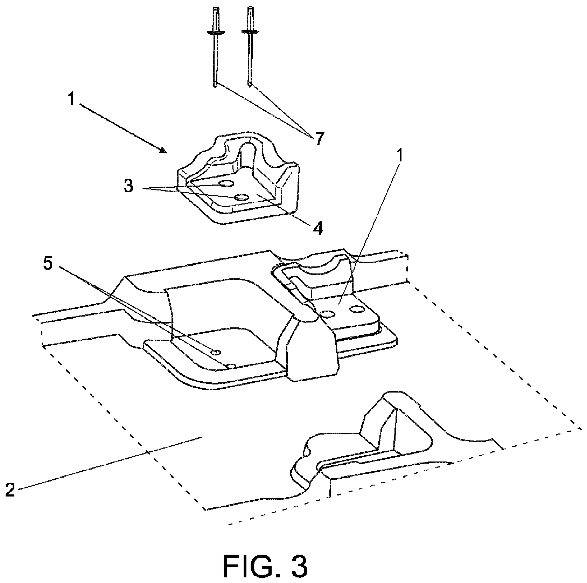

Said figures 1 to 3 also show the support element object of the present invention in use, particularly in figure 3, wherein a support element (1) is shown fastened to the transport platform (2), and showing a second support element (1) to be fastened to said transport platform (2) by means of two permanent fastening elements (7), which will be introduced through the through holes (3) that are located on the horizontal base (4) of the support element (1) and the through holes (5) that are arranged on the transport platform (2). In this case, each permanent fastening element (7) is a rivet and the support element (1) comprises two through holes (3) on the horizontal base (4).

Figures 1 to 3 show the support element (1) that is made up of a polymeric material, specifically of a polymeric material that is polyurethane.

We consider that it is unnecessary to make this description any longer, given that anyone skilled in the art will understand the scope of the invention and the advantages deriving therefrom.

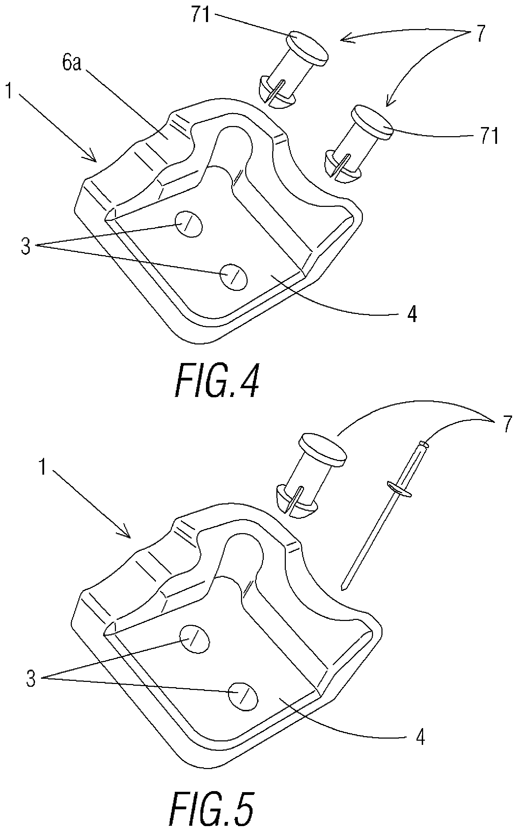

In figure 4 one can see how, alternatively, the permanent fastening elements (7) provided to be fastened in the through holes (3) consist of a clip rivet with a flat head, which can be easily placed either manually or with the help of a tool when applying pressure to the head (71). It is worth mentioning that the flat surface defined on the head (71) makes up a horizontal support plane at a different level than that of the surface of the horizontal base (4) of the support element (1), by which support of a specific piece can be improved, for example if there are movements associated with the transfer thereof or other operations of loading and unloading; instead of rubbing against the aforementioned horizontal base (4) of the support element (1), the rubbing would occur on the flat surface of the head (71) of the fastening element (7) without wearing away the support element (1).

In an alternative embodiment shown in figure 5, there is the possibility of simultaneously combining the fastening elements (7) as shown in figures 2 and 4.

The materials, shape and arrangement of the elements shall be subject to variation, so long as said variation does not entail an alteration to the essence of the invention.

The terms in which this specification has been described should always be understood in a broad, non-limiting sense.

## Claims

1. A support element (1) for transport platforms (2), **characterized in that** it comprises at least one through hole (3) on the horizontal base (4), two adjacent side walls (6a) and (6b) and a permanent fastening element (7) that passes through the through hole (3) on the horizontal base (4).

2. The support element (1) for transport platforms (2), according to claim 1, **characterized in that** the permanent fastening element (7) is a rivet.

3. The support element (1) for transport platforms (2), according to claim 1, **characterized in that** it comprises two through holes (3) on the horizontal base (4).

4. The support element (1) for transport platforms (2), according to claim 1, **characterized in that** it is made up of a polymeric material.

5. The support element (1) for transport platforms (2), according to claim 4, **characterized in that** the polymeric material is polyurethane.

6. The support element (1) for transport platforms (2), according to claim 1, **characterized in that** the permanent fastening element (7) is a clip rivet.

7. The support element (1) for transport platforms (2), according to claim 6, **characterized in that** the clip rivet has a flat head.
